# EUROPÄISCHE PATENTSCHRIFT

(11) **EP 0 454 699 B1**
(45) Veröffentlichungstag und Bekanntmachung des Hinweises auf die Patenterteilung: **31.03.1993**
(21) Anmeldenummer: 90901586.9
(22) Anmeldetag: 09.01.1990
(51) Int. Cl.: F16K 1/08

(54) **ABSPERR- ODER REGELARMATUR**
CUT-OFF OR CONTROL FITTING
ROBINET D'ARRET OU DE REGULATION

(30) Priorität: 21.01.1989 DE 3901700
(43) Veröffentlichungstag der Anmeldung: 06.11.1991
(73) Patentinhaber: KSB Aktiengesellschaft, 67227 Frankenthal (DE)
(72) Erfinder: BARTOSCHEK, Manfred, D-6710 Frankenthal (DE); LOVISETTO, Primo, I-36100 Vicenza (IT)
(86) Internationale Anmeldenummer: EP9000040
(87) Internationale Veröffentlichungsnummer: WO9008274

(56) Entgegenhaltungen:
- CH-A- 197 056
- DE-A- 2 047 668
- DE-C- 546 464
- FR-A- 606 208

## Beschreibung

Die Erfindung betrifft eine Absperr- oder Regelarmatur gemäß dem Oberbegriff des Anspruches 1.

Bei Armaturen, in denen quer zur Spindelachse gerichtete Kräfte auf die Spindel einwirken, muß eine Abstützung der Spindel im Gehäuse vorgesehen werden. Die Gefahr unzulässig hoher Querkräfte tritt vor allem bei Armaturen mit großem Betätigungsweg auf. Hier sind insbesondere die Absperrschieber zu nennen. Die Abstützung erfolgt durch Gehäuserippen oder -nuten oder durch spezielle Widerlager, die die Spindel umschließen und die mit der Gehäusewand in Kontakt stehen.

Die DE-C-1 959 547 zeigt in ihrer Fig. 3 ein Ventil, das mit einem Widerlager aus Blech ausgestattet ist. Das Widerlager umschließt die Spindel mit einer Aushalsung, in der sich die Spindel gleitend auf- und abwärts zu bewegen vermag. Mit einem umlaufenden Kragen liegt das Widerlager an der Gehäusewand an, wo es in einer nicht näher gekennzeichneten Weise befestigt ist.

Die gehäusefesten Abstützungen oder Widerlager erlauben, sofern sie nahe dem Armaturensitz angeordnet sind, nur einen relativ kurzen Spindelhub. Sie sind daher bei Absperrschiebern und Armaturen mit einem ähnlich langen Hub nicht einsetzbar. Ist die Abstützung allerdings an einer weiter vom Armaturensitz entfernt gelegenen Stelle des Gehäuses so angeordnet, daß sie den vollen Öffnungshub des Verschluß- oder Regelgliedes zuläßt, wird zwangsläufig ihre Abstützfunktion eingeschränkt. Die durch die Strömung verursachten, auf das Verschluß- oder Regelglied einwirkenden Querkräfte können wegen des großen Abstandes zur Abstützung im Extremfall zu einer so starken Auslenkung des Verschluß- oder Regelgliedes führen, daß dessen Funktion nicht mehr gewährleistet ist.

Der Erfindung liegt die Aufgabe zugrunde, eine Absperr- oder Regelarmatur zu schaffen, deren Verschluß- oder Regelglied auch bei einem langen Hub sicher gegen auftretende Querkräfte abgestützt ist.

Die gestellte Aufgabe wird, ausgehend von einem im Gehäuse angeordneten, die Spindel stützenden Widerlager, dadurch gelöst, daß das Widerlager in der Nähe des Verschluß- oder Regelgliedes mit der Spindel verbunden ist und dessen Außenfläche an der sie umschließenden Wand des Armaturengehäuses gleitend geführt ist, wobei der im Armaturengehäuse gebildete Sitz des Verschluß- oder Regelgliedes quer zur Durchströmrichtung angeordnet ist, so daß das Widerlager die Spindel gegen die durch die Strömung ausgeübten Querkräfte abstützt.

Die über den gesamten Hubbereich in der Nähe des Verschluß- oder Regelgliedes liegende Abstützung setzt das an der Spindel wirkende Biegemoment, unabhängig von der Strömungsrichtung, auf ein Mindestmaß herab. Eine die Biegekräfte berücksichtigende Anpassung des Spindeldurchmessers an einen großen Hub ist daher nicht notwendig.

Die Unteransprüche nennen vorteilhafte Ausgestaltungen des Erfindungsgegenstandes. Anhand zweier Ausführungsbeispiele wird die Erfindung näher erläutert. Die Zeichnung zeigt in
- Fig. 1: einen Teilschnitt durch eine Absperrarmatur mit einem die Spindel abstützenden Widerlager, in
- Fig. 2: das Widerlager der Fig. 1 in vergrößerter Einzeldarstellung, in
- Fig. 3: eine Draufsicht auf dieses Widerlager, in
- Fig. 4: eine Variante des Widerlagers, und in
- Fig. 5: eine Draufsicht auf das Widerlager der Fig. 4.

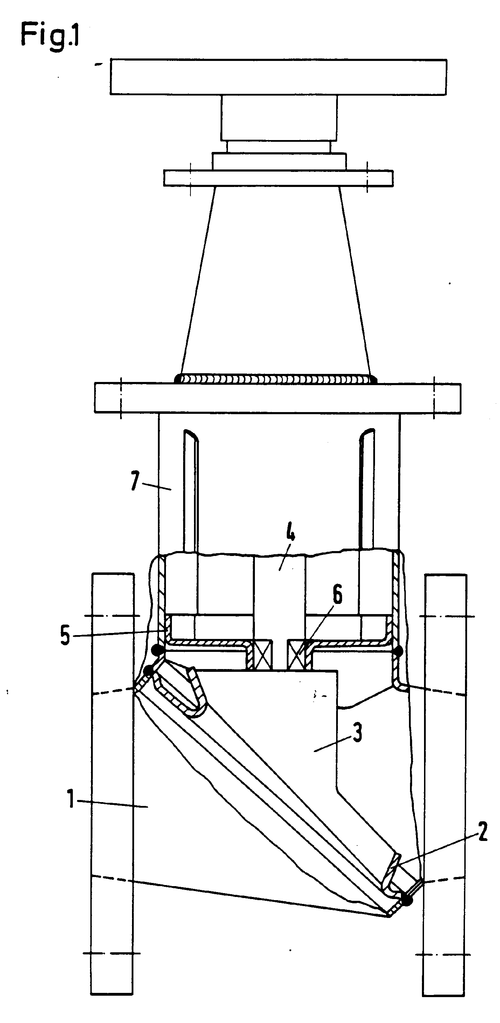

Das in der Fig. 1 dargestellte Hubventil besitzt ein Gehäuse (1), das aus mehreren Blechteilen durch Schweißnähte und Verschraubungen zusammengefügt ist. Mit dem Gehäuse (1) ist ein Sitzring (2) durch Schweißung verbunden, der mit einem Verschlußglied (3) zusammenwirkt. Das Verschlußglied (3) ist an einer auf- und abwärts bewegbaren, nichtdrehenden Spindel (4) befestigt. Der Abstützung der Spindel (4) dient ein Widerlager (5), das mit der Spindel (4) über einen Vierkant (6) drehfest verbunden ist. Das Widerlager (5) gleitet bei Bewegung der Spindel (4) in einem Gehäuseaufsatz (7) auf- oder abwärts.

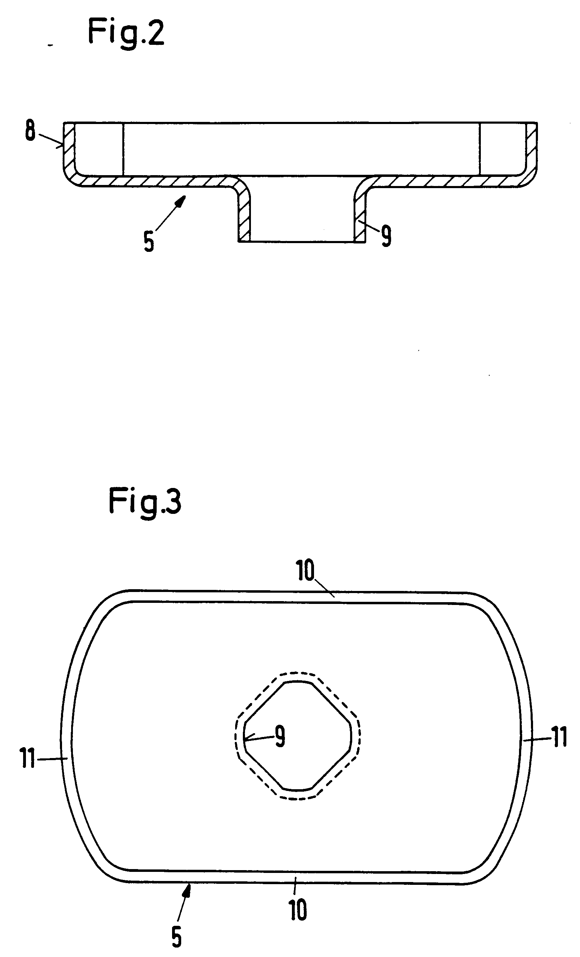

Wie vor allem aus der Fig. 2 ersichtlich ist, besitzt das Widerlager (5) eine Außenfläche (8), die auf der Wand des Gehäuseaufsatzes gleitet. Die die Verbindung mit dem Vierkant (6) herstellende Aushalsung (9) des Widerlagers (5) verläuft in der entgegengesetzten Richtung zur Außenfläche (8). Diese wegen der bestmöglichen Raumnutzung zu bevorzugende Gestaltung kann aber auch abgewandelt werden. So könnte die Aushalsung (9) nach oben gerichtet sein; der die Außenfläche (8) und die Aushalsung (9) miteinander verbindende Mittelteil des Widerlagers (5) könnte trichterförmig gestaltet sein.

Aus der Fig. 3 sind die als Verdrehsicherung für die Spindel (4) und das Verschlußglied (3) wirkenden Gestaltungsmerkale des Widerlagers (5) ersichtlich. Hier sind neben der bereits angesprochenen vierkantförmigen Aushalsung (9) zwei parallel verlaufende Wände (10) der Außenfläche (8) zu nennen. Die Wände (10) stehen über den gesamten Hub mit jeweils zwei senkrecht verlaufenden Sicken im Gehäuseaufsatz (7) in Kontakt. Zwei abgerundete Gleitflächen (11) vervollständigen die Außenfläche (8) des Widerlagers (5).

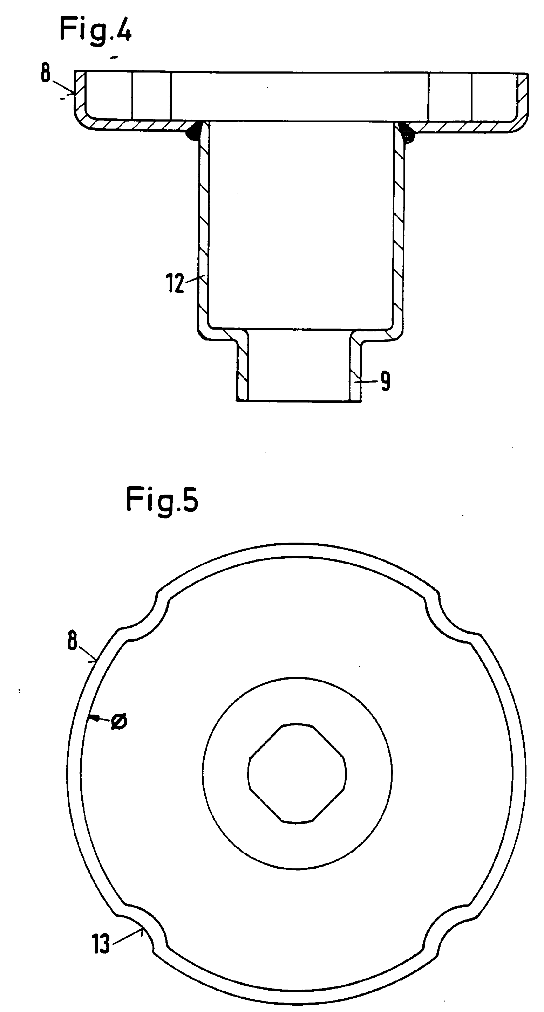

Bei der in den Fig. 4 und 5 dargestellten Variante des Widerlagers stellt ein rohrförmiger Übergang (12) die Verbindung zwischen der Aushalsung (9) und dem die Außenfläche (8) tragenden Teil her. Die verdrehsichere Führung erfolgt hier mit Hilfe von vier in einer kreisförmigen Außenfläche (8) angeordneten Sicken (13), die mit entsprechenden Sicken im Gehäuseaufsatz (7) zusammenwirken.

## Patentansprüche

1. Absperr- oder Regelarmatur, mit einem durch eine Spindel (4) betätigten Verschluß- oder Regelglied (3) und einem der Führung der Spindel (4) dienenden Widerlager (5), das die Spindel (4) mit einer Aushalsung umschließt und das über eine Außenfläche (8) mit der Wand des Armaturengehäuses (1, 7) in Kontakt steht, **dadurch gekennzeichnet**, daß das Widerlager (5) in der Nähe des Verschluß- oder Regelgliedes (3) mit der Spindel (4) verbunden ist und dessen Außenfläche (8) an der sie umschließenden Wand des Armaturengehäuses (1, 7) gleitend geführt ist, wobei der im Armaturengehäuse (1, 7) gebildete Sitz (2) des Verschluß- oder Regelgliedes (3) quer zur Durchströmrichtung angeordnet ist, so daß das Widerlager (5) die Spindel (4) gegen die durch die Strömung ausgeübten Querkräfte abstützt.

2. Absperr- oder Regelarmatur mit einer steigenden, nichtdrehenden Spindel nach Anspruch 1, dadurch gekennzeichnet, daß das Widerlager (5) drehfest mit der Spindel (4) verbunden ist und an seiner Außenfläche (8) einen eine Verdrehung verhindernden Formschluß mit der Wand des Armaturengehäuses besitzt.

3. Absperr- oder Regelarmatur nach den Ansprüchen 1 und 2, gekennzeichnet durch eine formschlüssige Verbindung zwischen Widerlager (5) und Spindel (4).

4. Absperr- oder Regelarmatur nach den Ansprüchen 1 bis 3, gekennzeichnet durch einen rohrförmigen Übergang (12) zwischen der formschlüssigen Verbindung des Widerlagers (5) mit der Spindel (4) und der gleitend im Armaturengehäuse geführten Außenfläche (8).

5. Absperr- oder Regelarmatur nach Anspruch 4, gekennzeichnet durch einen innerhalb des rohrförmigen Übergangs (12) angeordneten Faltenbalg.

6. Absperr- oder Regelarmatur nach Anspruch 1, dadurch gekennzeichnet, daß die Aushalsung (9) des Widerlagers (5) entgegengesetzt zur umlaufenden Außenfläche (8) gerichtet ist.

7. Absperr- oder Regelarmatur nach den Ansprüchen 1 und 2, dadurch gekennzeichnet, daß das Widerlager (5) und die es umschließende Wand des Armaturengehäuses (1, 7) einen zumindest abschnittsweise von einer Kreisform abweichenden Querschnitt besitzen.

8. Absperr- oder Regelarmatur nach Anspruch 1, dadurch gekennzeichnet, daß die Außenfläche (8) mit einer Gleitschicht aus Kunststoff versehen ist.

9. Absperr- oder Regelarmatur nach Anspruch 1 und 5, gekennzeichnet durch einen in eine umlaufende Sicke der Außenfläche (8) eingelegten geteilten Ring aus einem gleitfähigen Kunststoff.

10. Absperr- oder Regelarmatur nach Anspruch 1 und 5, gekennzeichnet durch ein in eine umlaufende Ausnehmung der Außenfläche (8) eingelegtes, an den Enden verklebtes Band aus einem gleitfähigen Kunststoff.

11. Absperr- oder Regelarmatur nach Anspruch 1 und 5, gekennzeichnet durch einen auf die Außenfläche (8) aufgespritzten gleitfähigen Kunststoff.

12. Absperr- oder Regelarmatur nach Anspruch 1, 5 und 8, gekennzeichnet durch zwei umlaufende schmale Auswölbungen in der Außenfläche (8) mit aufgespritztem gleitfähigen Kunststoff.

## Claims

1. A shut-down or flow rate regulation valve comprising a shut-down or regulation member (3) operated by a valve stem (4), and an abutment (5) functioning to guide the valve stem (4) and encircling same by means of a neck, said abutment (5) having an outer surface (8) in contact with the wall of the housing (1 and 7) of the valve, characterized in that in the vicinity of the shut-down or regulation member (3) the abutment (5) is connected with the valve stem (4) and its outer surface (8) is arranged to slide against the wall, encircling it, of the housing (1 and 7), the seat (2) formed in the housing (1 and 7) of the valve for the shut-down or regulation member (3) being arranged transversely in relation to the direction of flow with the result that the abutment (5) supports the valve stem (4) to resist transverse forces produced by the flow.

2. The shut-down or flow rate regulation valve comprising an upwardly extending, non-rotary valve stem as claimed in claim 1, characterized in that the abutment (5) is connected with the valve stem (4) in such a manner as to prevent relative twist and on its outer surface (8) possesses interlocking connection means cooperating with the wall of the valve housing to prevent rotation.

3. The shut-down or flow rate regulation valve as claimed in claim 1 and claim 2, characterized by an interlocking connection between the abutment (5) and the valve stem (4).

4. The shut-down or flow rate regulation valve as claimed in any one of the claims 1 through 3, characterized by a tubular transition between the interlocking connection of the abutment (5) with the valve stem (4) and the outer surface (8) guided for sliding motion in the valve housing.

5. The shut-down or flow rate regulation valve as claimed in claim 4, characterized by a boot arranged within the tubular transition (12).

6. The shut-down or flow rate regulation valve as claimed in claim 1, characterized in that the neck (9) on the abutment (5) is directed to extend oppositely to the surrounding outer surface (8).

7. The shut-down or flow rate regulation valve as claimed in claims 1 and 2, characterized in that the abutment (5) and the wall surrounding it of the housing (1 and 7) of the valve have a cross section which at least in part departs from a circular form.

8. The shut-down or flow rate regulation valve as claimed in claim 1, characterized in that the outer surface (8) is furnished with an anti-friction layer of synthetic resin.

9. The shut-down or flow rate regulation valve as claimed in claim 1 and in claim 5, characterized by a divided ring, arranged in an encircling groove in the outer surface (8), manufacture of an anti-friction synthetic resin.

10. The shut-down or flow rate regulation valve as claimed in claim 1 and in claim 5, characterized by a band, bonded at the ends thereof, arranged in an encircling groove in the outer surface (8), of an anti-friction synthetic resin.

11. The shut-down or flow rate regulation valve as claimed in claim 1 and in claim 5, characterized by an anti-friction synthetic resin sprayed onto the outer surface (8).

12. The shut-down or flow rate regulation valve as claimed in claims 1, 5 and 8, characterized by two encircling, narrow, outwardly curved parts in the outer surface (8) with sprayed on anti-friction synthetic resin.

## Revendications

1. Robinetterie d'arrêt ou de réglage avec un élément d'obturation ou de réglage (3) actionné par une broche (4) et avec une butée (5) servant de guidage de la broche (4), butée qui entoure la broche (4) par une encolure et qui est en contact avec la paroi du boîtier de la robinetterie (1, 7) par l'intermédiaire d'une surface externe (8) caractérisée en ce que la butée (5) est reliée à la broche (4) à proximité de l'élément d'obturation ou de réglage (3) et que sa surface externe (8) sur la paroi du boîtier de la robinetterie (1, 7) qui l'entoure est glissante alors que le siège (2) du membre d'obturation ou de réglage (3) formé dans le boîtier de la robinetterie (1, 7) est placé en travers du sens de passage du flux de sorte que la butée (5) soutienne la broche (4) contre les forces transversales exercées par l'écoulement.

2. Robinetterie d'arrêt ou de réglage avec une broche montante, non rotative, selon la revendication 1 caractérisée en ce que la butée (5) est liée à la broche (4) en rotation bloquée et qu'elle possède sur sa surface externe (8) une fermeture géométrique adaptée à la paroi du boîtier de la robinetterie et empêchant la rotation.

3. Robinetterie d'arrêt ou de réglage selon les revendications 1 et 2 caractérisée par une liaison avec fermeture géométrique entre la butée (5) et la broche (4).

4. Robinetterie d'arrêt ou de réglage selon les revendications 1 à 3 caractérisée par un passage (12) cylindrique entre la liaison avec fermeture géométrique de la butée (5) avec la broche (4) et la surface externe (8) guidée par glissage dans le boîtier de la robinetterie.

5. Robinetterie d'arrêt ou de réglage selon la revendication 4 caractérisée par un soufflet placé à l'intérieur du passage (12) cylindrique.

6. Robinetterie d'arrêt ou de réglage selon la revendication 1 caractérisé en ce que l'encolure (9) de la butée (5) est orientée dans le sens contraire de la surface externe périphérique (8).

7. Robinetterie d'arrêt ou de réglage selon les revendications 1 et 2 caractérisée en ce que la butée (5) et la paroi du boîtier de la robinetterie (1, 7) qui l'entoure possèdent une section qui diffère au moins en partie d'une forme circulaire.

8. Robinetterie d'arrêt ou de réglage selon la revendication 1 caractérisée en ce que la surface externe (8) est munie d'une couche glissante en matière synthétique.

9. Robinetterie d'arrêt ou de réglage selon les revendications 1 et 5 caractérisée par une bague divisée, en caoutchouc glissant, placée dans une moulure périphérique de la surface externe (8).

10. Robinetterie d'arrêt ou de réglage selon les revendications 1 et 5 caractérisée par une bande collée aux extrémités, en matière synthétique glissante et placée dans un creux périphérique de la surface externe (8).

11. Robinetterie d'arrêt ou de réglage selon les revendications 1 et 5 caractérisée par une matière synthétique glissante appliquée au pistolet sur la surface externe (8).

12. Robinetterie d'arrêt ou de réglage selon les revendications 1, 5 et 8 caractérisée par deux moulures étroites, périphériques dans la surface externe (8) avec une matière synthétique glissante appliquée au pistolet.
